# EUROPEAN PATENT APPLICATION

(11) **EP 4 782 667 A1**
(43) Date of publication of application: **29.07.2026**
(21) Application number: 26150740.4
(22) Date of filing: 08.01.2026
(51) Int. Cl.: F01P 3/18, F01P 11/08, F01P 11/10, F02M 35/16

(54) **VEHICLE COOLING DEVICE**

(30) Priority: 27.01.2025 JP 2025011760
(71) Applicant: HONDA MOTOR CO., LTD., Tokyo 105-8404 (JP)
(72) Inventor: HORI, Yusaku, Saitama, 351-0024 (JP); ONDA, Hiroshi, Saitama, 351-0024 (JP)
(74) Representative: Kiwit, Benedikt

(57) **Abstract**

Provided is a vehicle cooling device including an oil cooler capable of ensuring a degree of freedom in arrangement layout and improving cooling performance.

A vehicle cooling device, which includes an engine (12), a radiator (50) that is disposed on a vehicle front side of the engine (12) and cools cooling water for cooling the engine (12), and an oil cooler (90) that cools lubricating oil of the engine (12), and circulates the cooling water of the radiator (50) to the oil cooler (90), includes: a bracket (100) that fixes the oil cooler (90) to a lower portion of the engine (12) and disposes the oil cooler (90) so as to overlap a rear side of the radiator (50) in a vehicle front view.

## Description

### BACKGROUND

### Technical Field

The present invention relates to a vehicle cooling device.

### Related Art

Conventionally, a vehicle cooling device including an oil cooler which cools lubricating oil of an engine is known (see, for example, JP 2004-225572 A). JP 2004-225572 A describes a water-cooled oil cooler that is cooled using cooling water for cooling an engine. The oil cooler described in JP 2004-225572 A is disposed behind an exhaust pipe extending from the engine, and is directly attached to a front wall of a lower case of a crankcase of the engine.

### SUMMARY

In general, since an oil cooler which cools lubricating oil of an engine needs to be disposed in the vicinity of the engine, the oil cooler is likely to be restricted in layout due to a positional relationship with the engine, the exhaust pipe, and the like. Therefore, there is a problem that the size of the oil cooler or the like is restricted, and the performance of the oil cooler is likely to be restricted. In particular, in JP 2004-225572 A, since the oil cooler is disposed at a position where the oil cooler directly receives exhaust heat from the exhaust pipe and heat from the engine, there is also a problem that the performance of the oil cooler is likely to be restricted.

The present invention has been made in view of the above circumstances, and an object of the present invention is to provide a vehicle cooling device including an oil cooler capable of ensuring a degree of freedom in arrangement layout and improving cooling performance.

A vehicle cooling device, which includes an engine, a radiator that is disposed on a vehicle front side of the engine and cools cooling water for cooling the engine, and an oil cooler that cools lubricating oil of the engine, and circulates the cooling water of the radiator to the oil cooler, includes: a bracket that fixes the oil cooler to a lower portion of the engine and disposes the oil cooler so as to overlap a rear side of the radiator in a vehicle front view.

It is possible to provide a vehicle cooling device including an oil cooler capable of ensuring a degree of freedom in arrangement layout and improving cooling performance.

### BRIEF DESCRIPTION OF DRAWINGS

FIG. 1 is a side view of a saddle-ride vehicle according to an embodiment of the present invention;
FIG. 2 is a left side view illustrating a peripheral portion of an engine;
FIG. 3 is a perspective view of an exhaust device;
FIG. 4 is a perspective view illustrating an arrangement relationship between a radiator and the engine as viewed from a front left side;
FIG. 5 is a perspective view of a rear surface of the radiator as viewed from a left rear side;
FIG. 6 is a perspective view illustrating an arrangement relationship among an oil cooler, a bracket, and the engine as viewed from a left front side;
FIG. 7 is a perspective view illustrating the arrangement relationship among the oil cooler, the bracket, and the engine as viewed from a right front side;
FIG. 8 is a front view illustrating a state where the oil cooler is assembled to the bracket;
FIG. 9 is a right side view illustrating a state where the oil cooler is assembled to the bracket; and
FIG. 10 is a vehicle front view illustrating a main part of the saddle-ride vehicle.

### DETAILED DESCRIPTION

Embodiments of the present invention will be described below with reference to the drawings. Note that, in the description, directions such as front, rear, left, right, up, and down are the same as the directions with respect to a vehicle body unless otherwise specified. In addition, in each of the drawings, a reference sign FR denotes a front side of the vehicle body, a reference sign UP denotes an upper side of the vehicle body, and a reference sign LH denotes a left side of the vehicle body.

### [Embodiment]

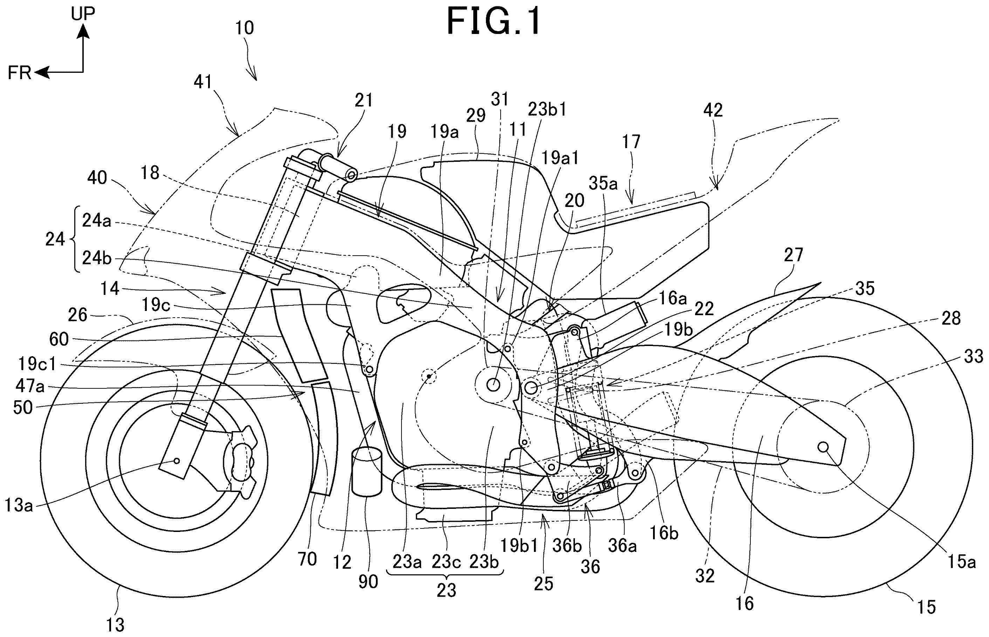

FIG. 1 is a side view of a saddle-ride vehicle 10 according to an embodiment of the present invention.

The saddle-ride vehicle 10 is a vehicle including a vehicle body frame 11, a power unit 12 supported by the vehicle body frame 11, a front fork 14 which supports a front wheel 13 so as to be steerable, a swing arm 16 that supports a rear wheel 15, and a seat 17 for a rider.

The saddle-ride vehicle 10 is a vehicle on which a rider sits so as to straddle the seat 17. The seat 17 is provided above a rear portion of the vehicle body frame 11.

The vehicle body frame 11 includes a head pipe 18 provided at a front end portion of the vehicle body frame 11, a front frame 19 located behind the head pipe 18, and a rear frame 20 located behind the front frame 19. A front end portion of the front frame 19 is connected to the head pipe 18.

The seat 17 is supported by the rear frame 20.

The front fork 14 is supported by the head pipe 18 so as to be steerable to the right and left. The front wheel 13 is supported by an axle 13a provided at a lower end portion of the front fork 14. A handlebar 21 for steering gripped by the rider is attached to an upper end portion of the front fork 14.

The swing arm 16 is supported by a pivot shaft 22 supported by the vehicle body frame 11. The pivot shaft 22 is a shaft extending horizontally in a vehicle width direction. The pivot shaft 22 is inserted through a front end portion of the swing arm 16. The swing arm 16 swings up and down with the pivot shaft 22 as the center.

The rear wheel 15 is supported by an axle 15a provided at a rear end portion of the swing arm 16.

The power unit 12 is disposed between the front wheel 13 and the rear wheel 15, and is supported by the vehicle body frame 11.

The power unit 12 is an internal combustion engine. The power unit 12 includes a crankcase 23 and a cylinder portion 24 that accommodates a reciprocating piston. An exhaust device 25 is connected to an exhaust port of the cylinder portion 24.

An output of the power unit 12 is transmitted to the rear wheel 15 by a driving force transmission member that connects the power unit 12 and the rear wheel 15.

In addition, the saddle-ride vehicle 10 includes a front fender 26 that covers the front wheel 13 from above, a rear fender 27 that covers the rear wheel 15 from above, steps 28 on which the rider places his/her feet, and a fuel tank 29 that stores fuel used by the power unit 12.

The front fender 26 is attached to the front fork 14. The rear fender 27 and the steps 28 are provided below the seat 17. The fuel tank 29 is supported by the vehicle body frame 11.

In the vehicle body frame 11 of the present embodiment, the front frame 19 includes a pair of left and right main frame portions 19a extending rearward and downward from the head pipe 18, a pivot frame portion 19b extending downward from the rear end of the main frame portion 19a, and a pair of left and right down frame portions 19c extending downward from the front end portion of the main frame portion 19a.

A unit hanger 19c1 that supports a front portion of the power unit 12 is provided at a lower end portion of the down frame portion 19c. A unit support portion 19a1 that supports the upper rear side of the power unit 12 is provided at the rear end portion of the main frame portion 19a. A unit support portion 19b1 that supports the rear portion of the power unit 12 is provided at the lower end portion of the pivot frame portion 19b.

The power unit 12 is supported on the front frame 19 by the unit hanger 19c1 and the unit support portions 19a1 and 19b1. The power unit 12 of the present embodiment is a so-called V-type engine.

Hereinafter, the power unit 12 is referred to as an engine 12.

The transmission 23b provided in the crankcase 23 of the engine 12 includes an output shaft 23b1 protruding laterally. A drive sprocket 31 is fixed to the output shaft 23b1. An endless drive chain 32 is wound around the drive sprocket 31. The drive chain 32 extends toward the rear wheel 15 and is wound around a driven sprocket 33 provided on the rear wheel 15. Accordingly, a rotational force as a driving force is transmitted from the engine 12 to the rear wheel 15.

The rear wheel 15 is rotatably supported by the rear end portion of the swing arm 16. In the swing arm 16, the front end portion of the swing arm 16 is swingably supported by the pivot frame portion 19b via the pivot shaft 22.

A cushion unit 35 is attached to the swing arm 16. Specifically, a cushion attachment portion 16a is formed in a front upper portion of the swing arm 16. An upper end portion of the cushion unit 35 extending in a vertical direction is swingably attached to the cushion attachment portion 16a. A lower end portion of the cushion unit 35 is attached to the lower end portion of the pivot frame portion 19b via a link mechanism 36 having a first link 36a extending in a front-rear direction and an inverted triangular second link 36b. A reservoir 35a for storing hydraulic oil is provided in an upper portion of the cushion unit 35. A link attachment portion 16b to which the first link 36a is connected is formed in a lower portion of the swing arm 16.

The vehicle body frame 11 is covered with a cowling 40. A windscreen 41 is supported on a front upper portion of the cowling 40. A fuel tank 29 is attached to an upper portion of the main frame portion 19a via a seat cowl 42. A seat 17 is attached to the seat cowl 42.

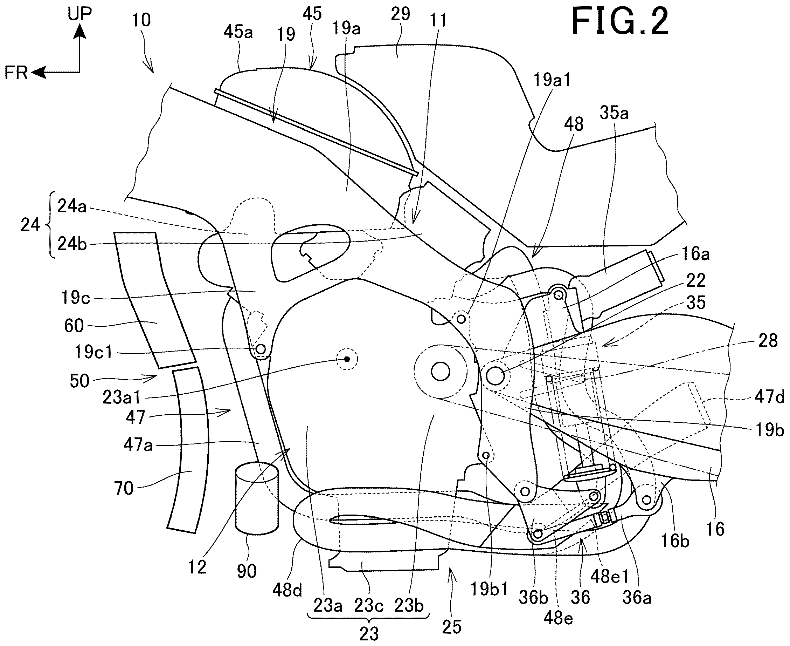

FIG. 2 is a left side view illustrating a peripheral portion of the engine 12.

The engine 12 of the present embodiment is a four-cylinder V-type engine. In the engine 12 of the present embodiment, the crankcase 23 includes a crankcase main body 23a on which a crankshaft 23a1 is disposed, a transmission 23b provided behind the crankcase main body 23a, and an oil pan 23c provided below the crankcase main body 23a. In addition, the cylinder portion 24 includes a front cylinder portion 24a provided at a front upper portion of the crankcase 23 and a rear cylinder portion 24b provided at a rear upper portion of the crankcase 23.

An intake device 45 is attached to the front cylinder portion 24a and the rear cylinder portion 24b. The intake device 45 is attached between the front cylinder portion 24a and the rear cylinder portion 24b. The intake device 45 includes an intake box 45a attached to the front cylinder portion 24a and the rear cylinder portion 24b, a throttle body (not illustrated) disposed in the intake box 45a, a fuel injection valve (not illustrated), and the like.

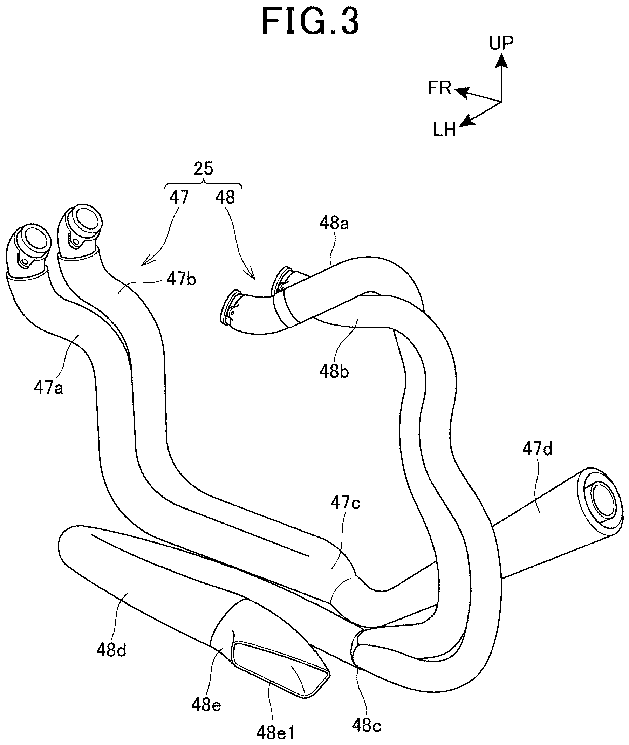

FIG. 3 is a perspective view of the exhaust device 25.

The exhaust device 25 includes a front exhaust device 47 connected to the front cylinder portion 24a and a rear exhaust device 48 connected to the rear cylinder portion 24b.

The front exhaust device 47 includes exhaust pipes 47a and 47b extending from the front portion of the front cylinder portion 24a, a collecting portion 47c where the exhaust pipes 47a and 47b are collected, and a muffler 47d attached to the collecting portion 47c.

Lower end portions of the exhaust pipes 47a and 47b overlap the oil pan 23c of the crankcase 23 in a vehicle side view (see FIG. 2).

The rear exhaust device 48 includes upstream-side exhaust pipes 48a and 48b extending from the rear portion of the rear cylinder portion 24b, a U-shaped downstream-side exhaust pipe 48d attached to a collecting portion 48c where the upstream-side exhaust pipes 48a and 48b are collected, and a discharge pipe 48e integrally provided at an end portion of the downstream-side exhaust pipe 48d. The discharge pipe 48e is provided at its end with an opening 48e1 for discharging exhaust gas.

The downstream-side exhaust pipe (exhaust pipe) 48d overlaps the oil pan 23c of the crankcase 23 in the vehicle side view (see FIG. 2).

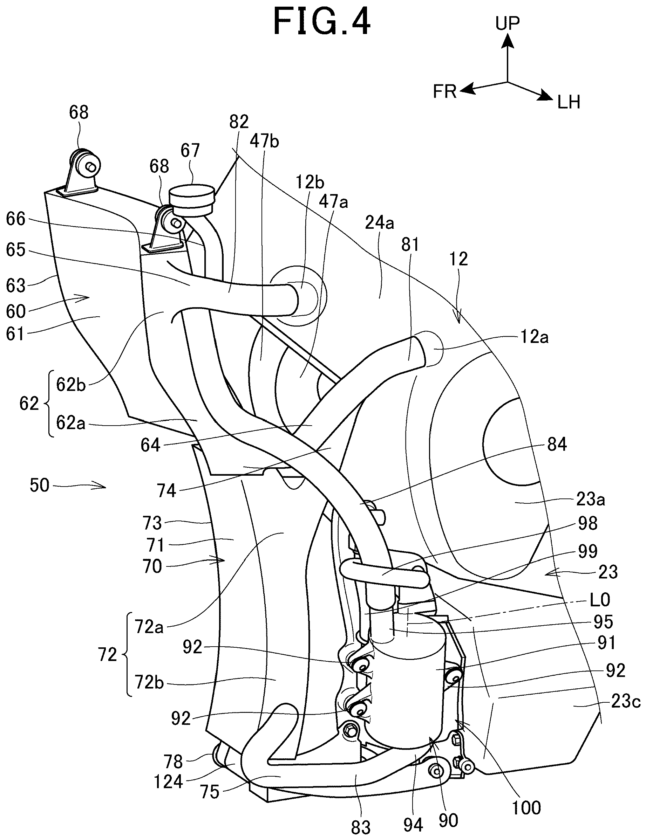

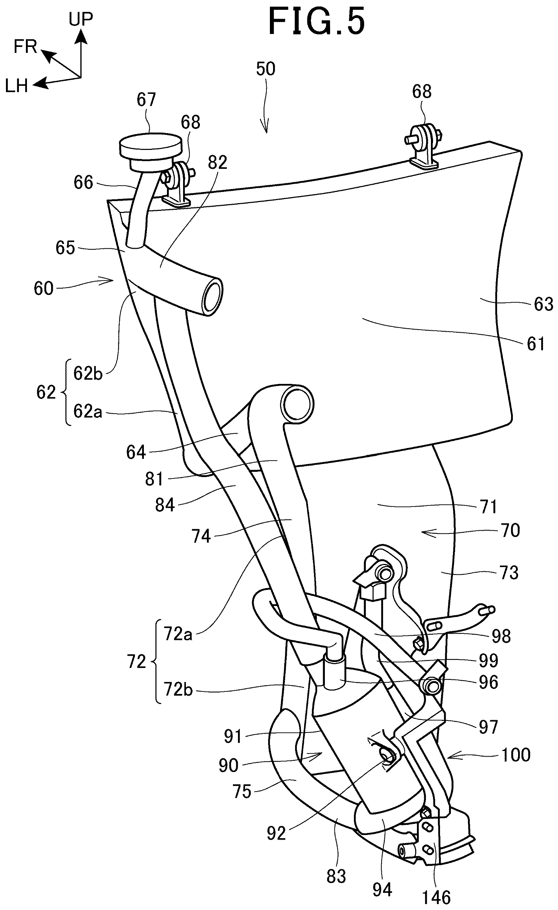

FIG. 4 is a perspective view illustrating an arrangement relationship between a radiator 50 and the engine 12 as viewed from a front left side. FIG. 5 is a perspective view of a rear surface of the radiator 50 as viewed from a left rear side.

The engine 12 is a water-cooled engine. The radiator 50 that cools cooling water is disposed in front of the engine 12.

The radiator 50 is formed in a substantially plate shape extending in a left-right direction (vehicle width direction). The radiator 50 includes an upper radiator 60 extending in the left-right direction and a lower radiator 70 supported below the upper radiator 60 and extending downward from the upper radiator 60. The lower radiator 70 is narrower in lateral width than the upper radiator 60.

The radiator 50 is supported by the front frame 19 on an upper side. In addition, the radiator 50 is supported by the engine 12 on a lower side. Specifically, the radiator 50 is supported by the down frame portion 19c of the front frame 19 via a bracket (not illustrated) by a stay 68 provided at the upper portion of the upper radiator 60. In addition, the radiator 50 is supported by the crankcase 23 at the lower end portion of the engine 12 via a bracket 100 by a stay 78 provided at the lower portion of the lower radiator 70.

As illustrated in FIGS. 4 and 5, the upper radiator 60 is horizontally long. The upper radiator 60 is curved in a front-rear direction such that both left and right end portions are located on the vehicle front side with respect to a lateral central portion. The upper radiator 60 includes a curved plate-shaped core 61 extending in the left-right direction, a left tank 62 provided on the left side of the core 61, and a right tank 63 provided on the right side of the core 61.

The core 61 includes a plurality of tubes (not illustrated) that communicate the left tank 62 and the right tank 63, and a plurality of fins (not illustrated) provided around the tubes (not illustrated).

In the present embodiment, the left tank 62 has a lower inflow tank portion 62a and an upper outflow tank portion 62b. The inflow tank portion 62a and the outflow tank portion 62b are partitioned inside.

The right tank 63 communicates in the vertical direction.

An inflow pipe 64 extending rearward is formed at a lower portion of the inflow tank portion 62a.

An outflow pipe 65 extending rearward is formed at an upper portion of the outflow tank portion 62b. A radiator liquid injection pipe 66 is connected to the outflow pipe 65. A radiator cap 67 is attached to an upper end portion of the radiator liquid injection pipe 66.

The lower radiator 70 is vertically long. The lower radiator 70 is supported within the lateral width of the upper radiator 60. The entire lower radiator 70 is disposed behind the upper radiator 60. The lower radiator 70 is curved in the front-rear direction such that both upper and lower end portions are located on the vehicle front side with respect to a vertical central portion. The lower radiator 70 includes a core 71 extending in the vehicle width direction, a left tank 72 provided on the left side of the core 71, and a right tank 73 provided on the right side of the core 71.

The core 71 includes a plurality of tubes (not illustrated) that communicate the left tank 72 and the right tank 73, and a plurality of fins (not illustrated) provided around the tubes (not illustrated).

In the present embodiment, the left tank 72 has an upper inflow tank portion 72a and a lower outflow tank portion 72b. The inflow tank portion 72a and the outflow tank portion 72b are partitioned inside.

The right tank 73 communicates in the vertical direction.

An inflow pipe 74 extending rearward is formed at an upper portion of the inflow tank portion 72a.

An outflow pipe 75 extending rearward is formed at a lower portion of the outflow tank portion 72b.

Here, the upper radiator 60 and the lower radiator 70 are connected via an appropriate pipe member.

That is, the inflow pipe 64 of the upper radiator 60 and the inflow pipe 74 of the lower radiator 70 are connected to a trifurcated branch pipe 81. The branch pipe 81 is connected to a cooling water outflow portion 12a (see FIG. 4) provided in the engine 12. Accordingly, the cooling water that has cooled the engine 12 flows into the inflow pipe 64 of the upper radiator 60 and the inflow pipe 74 of the lower radiator 70 via the branch pipe 81. Note that, in the present embodiment, a shape of the branch pipe 81 is constant, and a flow rate can be branched at a predetermined ratio. Alternatively, the branch pipe 81 may be provided with a controllable valve (not illustrated) to adjust the inflow amount of the cooling water flowing into the inflow pipe 64 and the inflow pipe 74. In addition, the branch pipe 81 may be provided with a thermostat instead of the valve. Accordingly, the inflow amount of the cooling water flowing into the inflow pipe 64 and the inflow pipe 74 may be adjusted depending on a temperature.

The outflow pipe 65 of the upper radiator 60 and the outflow pipe 75 of the lower radiator 70 are connected to a trifurcated junction pipe 82. In the present embodiment, the outflow pipe 75 of the lower radiator 70 is connected to the junction pipe 82 via a water-cooled oil cooler 90. The junction pipe 82 is connected to a cooling water inflow portion 12b provided in the engine 12. Accordingly, the cooling water flowing out from the outflow pipe 65 of the upper radiator 60 and the cooling water flowing out from the outflow pipe 75 of the lower radiator 70 join in the junction pipe 82 and flow into the engine 12. Note that the junction pipe 82 may be provided with a thermostat (not illustrated), and the outflow amount of the cooling water flowing out from the outflow pipe 65 and the outflow amount of the cooling water flowing out from the outflow pipe 75 may be adjustable depending on a temperature.

As illustrated in FIGS. 4 and 5, the oil cooler 90 has an external cylindrical shape extending in the vertical direction. The oil cooler 90 has a substantially cylindrical casing 91 having an axis Lo (see FIG. 4). A stay 92 extending in a radial direction is formed in the casing 91. The stay 92 extends along the axis Lo of the casing 91. In other words, the stay 92 has a thickness in a direction orthogonal to the axis Lo of the casing 91. In the present embodiment, a pair of upper and lower stays 92 are formed at the front end portion of the casing 91. In addition, one stay 92 is formed at the rear end portion of the casing 91.

A first water pipe 94 (see FIG. 4) extending forward is formed in a lower portion of the casing 91. A second water pipe 95 (see FIG. 4) extending upward is formed in an upper portion of the casing 91. A water flow path connected by the first water pipe 94 and the second water pipe 95 is formed inside the casing 91.

A first oil pipe 96 (see FIG. 5) extending upward is formed in an upper portion of the casing 91. A second oil pipe 97 (see FIG. 5) is formed in a lower portion of the casing 91 so as to be curved to the side of the casing 91. An oil flow path connected by the first oil pipe 96 and the second oil pipe 97 is formed inside the casing 91.

The oil flow path and the water flow path do not communicate with each other. The oil cooler 90 is configured to allow heat exchange between the oil flowing through the oil flow path and the cooling water flowing through the water flow path.

Here, the first water pipe 94 is connected to the outflow pipe 75 of the lower radiator 70 via a piping member 83. The second water pipe 95 is connected to the junction pipe 82 via a piping member 84.

In addition, the first oil pipe 96 is connected to an oil outflow portion (not illustrated) provided in the engine 12 via a piping member 98 or the like. Furthermore, the second oil pipe 97 is connected to an oil inflow portion (not illustrated) provided in the engine 12 via a piping member 99 or the like.

In the present embodiment, the cooling water is pumped by a water pump (not illustrated) provided in the crankcase 23 and circulates between the engine 12 and the radiator 50.

That is, the cooling water that has cooled the engine 12 and increased in temperature flows into the branch pipe 81 when flowing out from the cooling water outflow portion 12a.

In the branch pipe 81, the cooling water flowing into the inflow pipe 64 of the upper radiator 60 flows from the inflow tank portion 62a of the left tank 62 to the left outflow tank portion 62b via the right tank 63 in the upper radiator 60, is cooled by traveling wind in the core 61, and flows out from the outflow pipe 65. Then, the cooling water cooled by the upper radiator 60 flows into the cooling water inflow portion 12b via the junction pipe 82.

Therefore, the cooling water cooled by the upper radiator 60 is configured to flow directly to the engine 12.

On the other hand, in the branch pipe 81, the cooling water flowing into the inflow pipe 74 of the lower radiator 70 flows from the inflow tank portion 72a of the left tank 72 to the left outflow tank portion 72b via the right tank 73 in the lower radiator 70, is cooled by traveling wind in the core 71, and flows out from the outflow pipe 75. Then, the cooling water cooled by the lower radiator 70 flows into the oil cooler 90.

Therefore, the cooling water cooled by the lower radiator 70 is configured to flow directly to the oil cooler 90. The cooling water flowing out of the oil cooler 90 flows out to the junction pipe 82 via the piping member 84, joins with the cooling water cooled by the upper radiator 60, and flows to the engine 12.

In the present embodiment, oil (lubricating oil) is pumped by an oil pump (not illustrated) provided in the crankcase 23, and circulates between the engine 12 and the oil cooler 90.

That is, the oil heated at the time of lubricating the inside of the engine 12 flows into the oil cooler 90 via the piping member 98. When flowing out of the oil cooler 90 through a flow path in the oil cooler 90, the oil is retransmitted to the engine 12 via the piping member 99. Note that a direction in which the oil flows in the oil cooler 90 may be reversed. That is, the first oil pipe 96 may be connected to an oil inflow portion (not illustrated), and the second oil pipe 97 may be connected to an oil outflow portion (not illustrated).

Therefore, the cooling water flows and the oil flows to the oil cooler 90. The oil cooler 90 is configured to exchange heat between the cooling water flowing through the water flow path and the oil flowing through the oil flow path. Accordingly, in the oil cooler 90, the temperature of the cooling water rises and the oil is cooled.

The oil cooler 90 of the present embodiment is disposed in front of the engine 12 via the bracket 100.

The engine 12, the radiator 50, the oil cooler 90, the bracket 100, and appropriate piping members constitute the vehicle cooling device of the present embodiment.

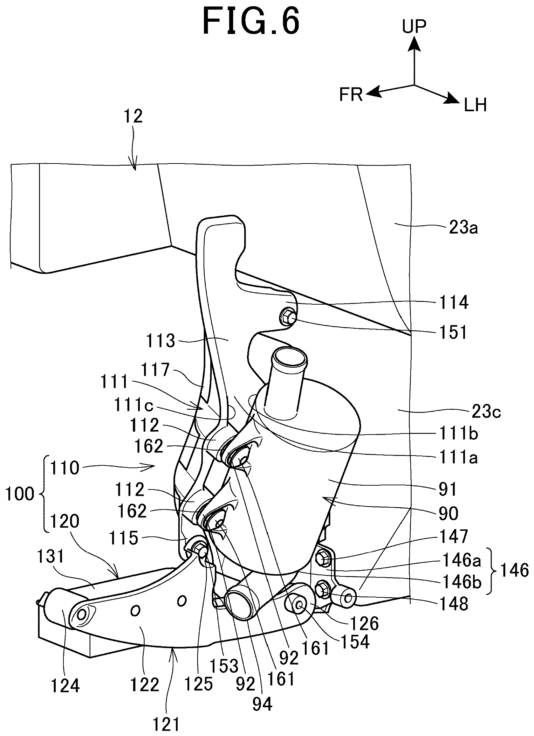

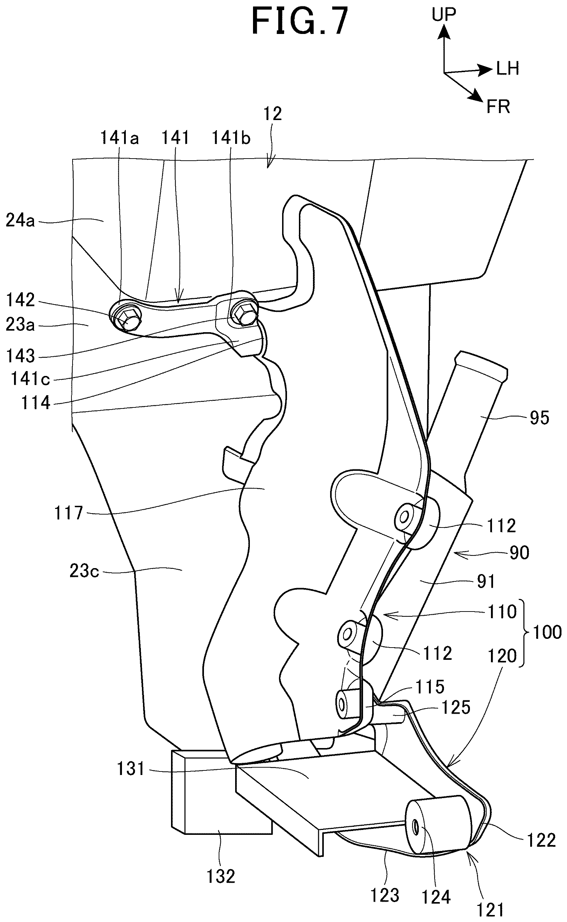

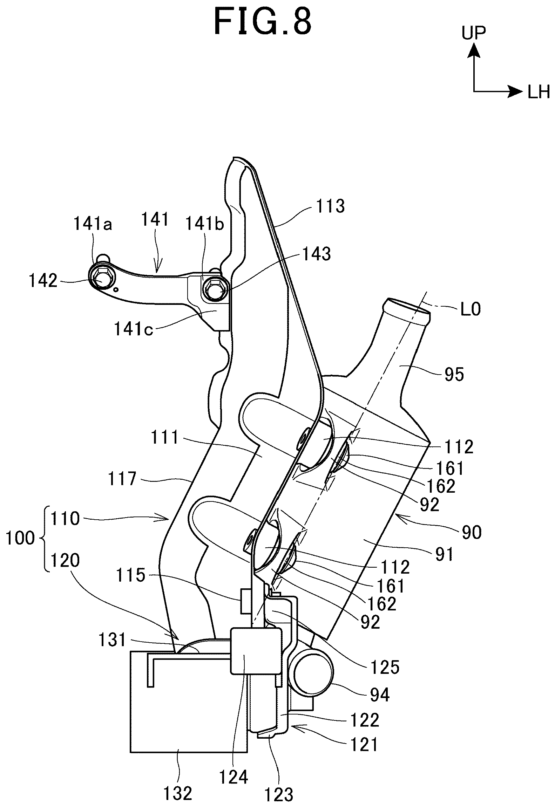

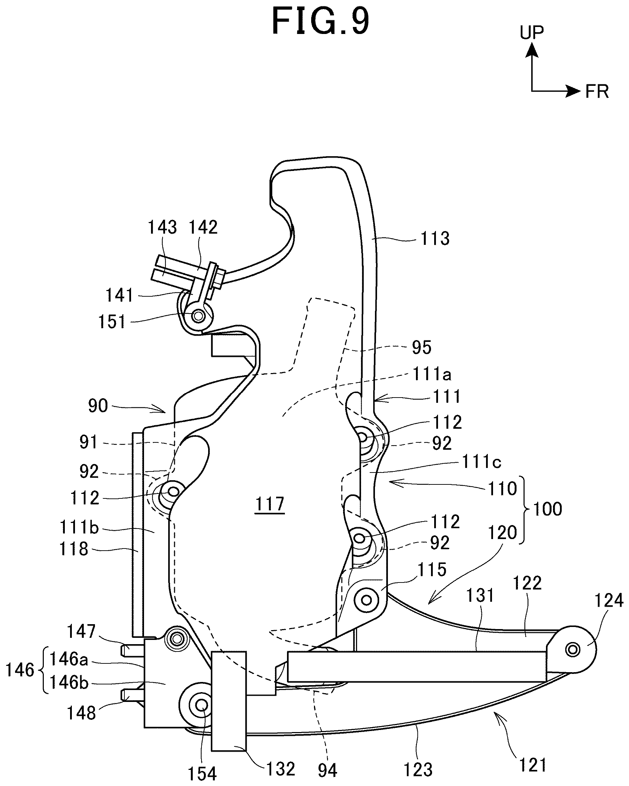

FIG. 6 is a perspective view illustrating an arrangement relationship among the oil cooler 90, the bracket 100, and the engine 12 as viewed from a left front side. FIG. 7 is a perspective view illustrating the arrangement relationship among the oil cooler 90, the bracket 100, and the engine 12 as viewed from a right front side. FIG. 8 is a front view illustrating a state where the oil cooler 90 is assembled to the bracket 100. FIG. 9 is a right side view illustrating a state where the oil cooler 90 is assembled to the bracket 100. In other words, FIG. 9 is a view illustrating a state where oil cooler 90 is assembled to the bracket 100 as viewed from the inside in the vehicle width direction.

The bracket 100 includes an upper bracket (upper bracket portion) 110 that supports the oil cooler 90 and a lower bracket (lower bracket portion) 120 that supports the upper bracket 110.

The upper bracket 110 is formed of, for example, carbon fiber reinforced plastics (CFRP). However, the upper bracket 110 may be formed of metal instead of CFRP.

As illustrated in FIG. 6, the upper bracket 110 includes a tray portion 111 in which the oil cooler 90 is disposed. The tray portion 111 has a shape recessed inward in the vehicle width direction in accordance with the side shape of the oil cooler 90. The tray portion 111 includes a vehicle width direction inner wall (first wall portion) 111a, a rear wall (second wall portion) 111b protruding outward in the vehicle width direction from the rear end of the vehicle width direction inner wall 111a, and a front wall 111c protruding outward in the vehicle width direction from the rear end of the vehicle width direction inner wall 111a. In the tray portion 111, most of the oil cooler 90 overlaps in a vehicle body side view (see FIG. 9).

A cooler fastening portion 112 is formed in front of and behind the tray portion 111. The cooler fastening portion 112 has a seat surface that is inclined downward from the outside to the inside in the vehicle width direction.

An extension portion 113 extending upward is formed at the upper end of the tray portion 111. The extension portion 113 overlaps the second water pipe 95 of the oil cooler 90 in the vehicle body side view (see FIG. 9). An extension fixing portion 114 extending rearward is formed at the vertically intermediate portion of the extension portion 113.

A bracket fastening portion 115 (see FIG. 7) is formed at the front lower end portion of the tray portion 111.

An engine fixing portion is formed at the rear lower end portion of the tray portion 111.

A sheet-like heat insulating member 117 is attached to the inner surface of the tray portion 111 in the vehicle width direction. The heat insulating member 117 is formed of a material capable of insulating heat from the exhaust pipe 47a and the engine 12. The heat insulating member 117 is attached by, for example, an adhesive.

A backing member 118 is disposed on the rear surface of the rear wall 111b of the tray portion 111 (see FIG. 9). The backing member 118 is, for example, a heat insulating member having elasticity. The backing member 118 is attached with an adhesive.

The tray portion 111, the cooler fastening portion 112, the extension portion 113, the extension fixing portion 114, the bracket fastening portion 115, the heat insulating member 117, the backing member 118, and the like constitute the upper bracket 110 of the present embodiment.

Here, a bolt (fixing member) 151 extending in the vehicle width direction is inserted into the extension fixing portion 114. The bolt 151 is fastened to an upper stay 141 (see FIG. 7) fixed to the engine 12. As illustrated in FIG. 7, the upper stay 141 extends in the vehicle width direction. Engine fixing portions 141a and 141b are formed at both ends of the upper stay 141 in a longitudinal direction. Bolts 142 and 143 extending in the front-rear direction are inserted into the engine fixing portions 141a and 141b. The bolts 142 and 143 are fastened to the engine 12, whereby the upper stay 141 is fixed to the engine 12. A bracket fastening portion 141c is formed at the outer end of the upper stay 141 in the vehicle width direction. The bolt 151 (see FIG. 6) is fastened to the bracket fastening portion 141c.

Accordingly, the extension fixing portion 114 of the upper bracket 110 is fixed to the engine 12 via the upper stay 141.

In addition, an engine fixing portion at the rear lower end portion of the tray portion 111 is fastened to a lower stay 146 fixed to the engine 12. The lower stay 146 has a bent plate shape. The lower stay 146 has an engine fixing portion 146a fixed to the front surface of the crankcase 23, specifically, the front surface of the oil pan 23c.

Bolts 147 and 148 extending in the front-rear direction are inserted into the engine fixing portion 146a.

The bolts 147 and 148 are fastened to the front surface of the oil pan 23c, whereby the lower stay 146 is fixed to the engine 12.

A bracket support portion 146b extending forward is formed at an inner end of the lower stay 146 in the vehicle width direction. An engine fixing portion at the rear lower end portion of the tray portion 111 is fastened to the bracket support portion 146b.

Accordingly, the upper bracket 110 is fixed to the engine 12 via the lower stay 146.

In this way, the upper bracket 110 is fixed to the engine 12 via the upper stay 141 and the lower stay 146.

At this time, the upper bracket 110 is fixed in a state where the backing member 118 is sandwiched between the rear wall 111b of the tray portion 111 and the front surface of the crankcase 23.

The lower bracket 120 is disposed below the upper bracket 110. The lower bracket 120 has an extension bracket 121 extending in the front-rear direction. The extension bracket 121 extends in the extending direction of the first water pipe 94 of the oil cooler 90 in the vehicle body side view (see FIGS. 8 and 9). The extension bracket 121 has a substantially L shape in a vehicle front view. The extension bracket 121 has an outer surface portion 122 extending in the vertical direction and a bottom surface portion 123 (see FIG. 7) extending inward in the vehicle width direction from the lower end of the outer surface portion 122.

A radiator support portion 124 extending in the vehicle width direction is supported at the front end of the outer surface portion 122. The stay 78 (see FIG. 4) at the lower end of the lower radiator 70 is fixed to the radiator support portion 124. A bracket fastening portion 125 extending upward is formed at the longitudinal intermediate portion of the outer surface portion 122. An engine fixing portion (engine support portion) 126 is formed at the rear end of the outer surface portion 122.

Herein, the bracket fastening portion 125 is fastened to the bracket fastening portion 115 of the upper bracket 110 with a bolt 153 extending in the vehicle width direction. In addition, a fixture 154 extending in the vehicle width direction is inserted into the engine fixing portion 126. The fixture 154 is fixed to the bracket support portion 146b of the lower stay 146.

Accordingly, the lower bracket 120 supports the radiator 50 and the upper bracket 110 in a state of being fixed to the engine 12.

A reinforcing member 131 is disposed above the bottom surface portion 123. The reinforcing member 131 is a plate member having a thickness in the vertical direction. The reinforcing member 131 is fixed to the lower bracket 120 by being appropriately joined to the radiator support portion 124 and the outer surface portion 122.

A heat shielding member 132 extending in the vehicle width direction is supported behind the bottom surface portion 123. The heat shielding member 132 has a thickness in the front-rear direction. The heat shielding member 132 has a plate shape extending in the vertical direction and the left-right direction. The heat shielding member 132 is disposed in front of the downstream-side exhaust pipe 48d. The heat shielding member 132 shields heat from the downstream-side exhaust pipe 48d and the engine 12.

The extension bracket 121, the radiator support portion 124, the reinforcing member 131, and the heat shielding member 132 constitute the lower bracket 120 of the present embodiment.

The oil cooler 90 is rubber-mounted on the bracket 100. Specifically, a bolt 161 is inserted into the stay 92 of the oil cooler 90 via a grommet 162. The grommet 162 is mounted so as to be fitted to the stay 92 and cover both surfaces of the stay 92. When the bolt 161 is fastened to the cooler fastening portion 112 of the upper bracket 110, the grommet 162 is interposed between the head of the bolt 161 and the stay 92, and the grommet 162 is interposed between the stay 92 and the seat surface of the cooler fastening portion 112. Accordingly, the oil cooler 90 is fixed to the engine 12 in a state where vibration is hardly transmitted. The oil cooler 90 is fixed to the engine 12 in a state of being inclined upward as the axis Lo advances outward in the vehicle width direction.

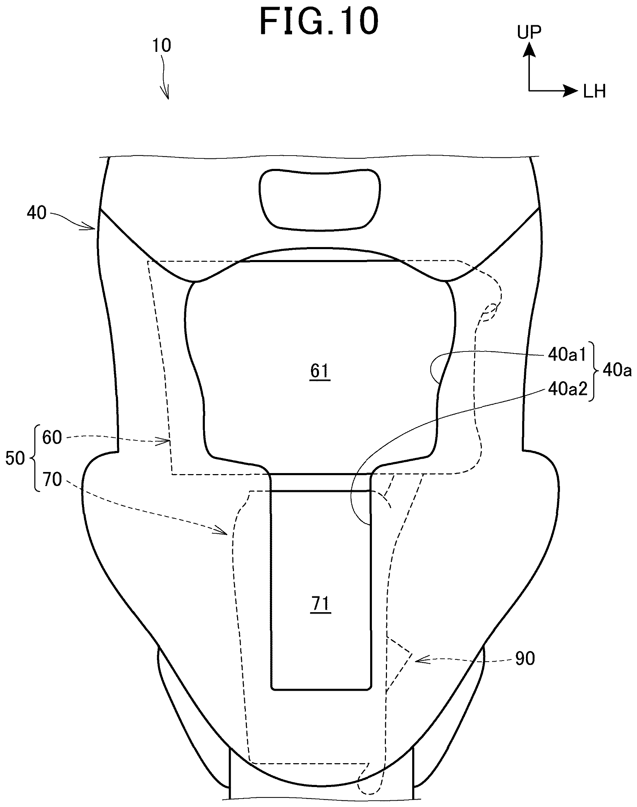

FIG. 10 is a vehicle front view illustrating a main part of the saddle-ride vehicle 10.

As illustrated in FIGS. 1 and 10, the radiator 50 of the present embodiment is covered with the cowling 40. At this time, the core 61 of the upper radiator 60 and the core 71 of the lower radiator 70 are exposed to the front through an opening 40a. The opening 40a has a T-shape in the vehicle front view. Specifically, the opening 40a has a rectangular upper opening 40a1 extending in the vehicle width direction, and a lower opening 40a2 extending downward from a central portion of the upper opening 40a1 in the left-right direction. The upper opening 40a1 is narrower in lateral width than the upper radiator 60. The lower opening 40a2 is narrower in lateral width than the lower radiator 70. The core 61 of the upper radiator 60 is exposed forward from the upper opening 40a1. The core 71 of the lower radiator 70 is exposed forward from the lower opening 40a2.

At this time, the oil cooler 90 is disposed behind the lower radiator 70. The oil cooler 90 mostly overlaps the lower radiator 70 in a vehicle front view. That is, the oil cooler 90 is also covered with the cowling 40, and the oil cooler 90 overlaps the cowling 40 in the vehicle front view. In addition, in the vehicle side view, the oil cooler 90 is covered with the cowling 40, and the oil cooler 90 overlaps the cowling 40.

In the present embodiment, the oil cooler 90 is indirectly supported by the engine 12 via the bracket 100 and the stays 141 and 146. Therefore, as compared with a case where the oil cooler 90 is directly attached to the engine 12, it becomes easier to change the arrangement position of the oil cooler 90, and it becomes easier to ensure the cooling performance of the oil cooler 90 by enlarging the oil cooler 90 regardless of the shape of the engine 12. In other words, it becomes easier to configure the performance of the oil cooler 90 according to the performance of the saddle-ride vehicle 10.

In addition, since the oil cooler 90 is indirectly supported by the engine 12, heat from the engine 12 is less likely to be transferred. Therefore, it becomes easier to ensure the cooling performance of the oil cooler 90. Furthermore, it becomes easier to improve the assemblability of the oil cooler 90 by using the bracket 100 and the stays 141 and 146.

Here, the oil cooler 90 overlaps the exhaust pipe 47a in the vehicle side view (see FIG. 2). Therefore, a vehicle width direction inner wall 111a of the upper bracket 110 also overlaps the exhaust pipe 47a. Therefore, the vehicle width direction inner wall 111a of the upper bracket 110 is interposed between the oil cooler 90 and the exhaust pipe 47a.

In addition, the rear wall 111b of the upper bracket 110 is interposed between the oil cooler 90 and the downstream-side exhaust pipe 48d or the crankcase 23.

Therefore, the oil cooler 90 is less likely to be directly affected by radiant heat from the exhaust pipe 47a, the downstream-side exhaust pipe 48d, and the crankcase 23. At this time, the heat insulating member 117 is attached to the upper bracket 110, and it becomes easier to insulate heat from the exhaust pipe 47a, the downstream-side exhaust pipe 48d, and the crankcase 23. In addition, the lower bracket 120 is provided with the heat shielding member 132, and it is further less likely to be affected by heat from the downstream-side exhaust pipe 48d.

Therefore, it becomes easier to ensure the cooling performance of the oil by the oil cooler 90.

As described above, according to the present embodiment to which the present invention is applied, the vehicle cooling device, which includes the engine 12, the radiator 50 that is disposed on the vehicle front side of the engine 12 and cools cooling water for cooling the engine 12, and the oil cooler 90 that cools the oil (lubricating oil) of the engine 12, and circulates the cooling water of the radiator 50 to the oil cooler 90, includes the bracket 100 that fixes the oil cooler 90 to the lower portion of the engine 12 and disposes the oil cooler 90 so as to overlap the rear side of the radiator 50 in a vehicle front view (a front view of the vehicle).

According to this configuration, it is possible to ensure the degree of freedom of the layout of the oil cooler 90 by interposing the bracket 100, and it is possible to make it difficult to restrict the volume of the oil cooler 90. In addition, the bracket 100 makes it difficult to be affected by heat of the engine 12. Therefore, it is possible to provide the vehicle cooling device including the oil cooler 90 capable of ensuring the degree of freedom of the arrangement layout and improving the cooling performance.

In the present embodiment, the radiator 50 includes the upper radiator 60 and the lower radiator 70 that is narrower in lateral width than the upper radiator 60, and in the vehicle front view (the front view of the vehicle), the oil cooler 90 is disposed behind the radiator 50 and a part thereof is disposed to be viewed from behind the radiator 50.

According to this configuration, the oil cooler 90 is disposed on the inner side in the vehicle width direction so as to overlap the rear side of the radiator 50, whereby the vehicle width can be narrowed. In addition, since the oil cooler 90 is water-cooled, the cooling performance of the oil cooler 90 can be easily improved. Therefore, according to this configuration, the vehicle width can be narrowed, and the cooling performance of the oil cooler 90 can be easily improved.

In addition, in the present embodiment, the upper radiator 60 is used for circulating cooling water for cooling the engine 12, and the lower radiator 70 is used for circulating cooling water for cooling the oil cooler 90.

According to this configuration, the cooling performance of the engine 12 and the cooling performance of the oil (lubricating oil) can be easily obtained by selectively using the upper radiator 60 and the lower radiator 70 according to the required cooling performance of the engine 12 and the required cooling performance of the oil.

In addition, in the present embodiment, the bracket 100 includes the lower bracket 120, and the lower bracket 120 includes the radiator support portion 124 that supports the lower radiator 70 provided at the vehicle front portion of the lower bracket 120 and the engine fixing portion 126 supported by the engine 12 provided at the vehicle rear portion of the lower bracket 120.

According to this configuration, since the radiator 50 is supported by the bracket 100, the oil cooler 90 can be supported without providing a dedicated support member that supports only the oil cooler 90.

In addition, in the present embodiment, the bracket 100 includes the upper bracket 110 on which the oil cooler 90 is supported, the upper bracket 110 is supported by the lower bracket 120 and supported by the engine 12, and the upper bracket 110 includes the vehicle width direction inner wall 111a that separates the oil cooler 90 and the exhaust pipe 47a, and the rear wall 111b that separates the oil cooler 90 and the lower portion of the engine 12.

According to this configuration, it is possible to suppress an influence that the oil cooler 90 receives radiant heat from the exhaust pipe 47a and the engine 12.

In addition, in the present embodiment, the lower bracket 120 is provided with the plate-shaped heat shielding member 132 that separates the oil cooler 90 and the downstream-side exhaust pipe 48d.

According to this configuration, it is possible to further suppress the influence that the oil cooler 90 receives radiant heat from the downstream-side exhaust pipe 48d.

### [Other Embodiments]

The above-described embodiment merely describes one aspect of the present invention and can be optionally modified and applied without departing from the gist of the present invention.

In the above-described embodiment, the configuration has been described in which the bracket 100 includes the upper bracket 110 and the lower bracket 120 that are separate bodies, and the upper bracket 110 and the lower bracket 120 are fixed and integrated by the bolt 153, the fixture 154, or the like. However, the upper bracket 110 and the lower bracket 120 may not be separated, and may be integrally formed in advance.

In the above-described embodiment, the configuration has been described in which in the vehicle front view (the front view of the vehicle), the oil cooler 90 is disposed behind the radiator 50 and a part thereof is disposed so as to be viewed from behind the radiator 50. However, the oil cooler may be disposed so as to be entirely hidden behind the radiator 50.

In the above-described embodiment, the description has been given with regard to a motorcycle including the front wheel 13 and the rear wheel 15, as an example of the saddle-ride vehicle 10. However, the present invention is not limited to this. The present invention is applicable to a three-wheel saddle-ride vehicle including two front wheels or two rear wheels or a saddle-ride vehicle including four or more wheels.

### [Configurations Supported by Above Embodiments]

The above-described embodiment supports the following configurations.

(Configuration 1) A vehicle cooling device that includes an engine, a radiator that is disposed on a vehicle front side of the engine and cools cooling water for cooling the engine, and an oil cooler that cools lubricating oil of the engine, and circulates the cooling water of the radiator to the oil cooler, the vehicle cooling device including: a bracket that fixes the oil cooler to a lower portion of the engine and disposes the oil cooler so as to overlap a rear side of the radiator in a vehicle front view.

According to this configuration, it is possible to ensure the degree of freedom of the layout of the oil cooler by interposing the bracket, and it is possible to make it difficult to restrict the volume of the oil cooler. In addition, the bracket makes it difficult to be affected by heat of the engine. Therefore, it is possible to provide the vehicle cooling device including the oil cooler capable of ensuring the degree of freedom of the arrangement layout and improving the cooling performance.

(Configuration 2) The vehicle cooling device according to Configuration 1, in which the radiator includes an upper radiator and a lower radiator that is narrower in lateral width than the upper radiator, and in the vehicle front view, the oil cooler is disposed behind the radiator so as to be entirely hidden, or is disposed so as to be partially viewed from behind the radiator.

According to this configuration, the oil cooler is disposed on the inner side in the vehicle width direction so as to overlap the rear side of the radiator, whereby the vehicle width can be narrowed. In addition, since the oil cooler is water-cooled, the cooling performance of the oil cooler can be easily improved. Therefore, according to this configuration, the vehicle width can be narrowed, and the cooling performance of the oil cooler can be easily improved.

(Configuration 3) The vehicle cooling device according to Configuration 2, in which the upper radiator is used for circulating cooling water for cooling the engine, and the lower radiator is used for circulating cooling water for cooling the oil cooler.

According to this configuration, the cooling performance of the engine and the cooling performance of the lubricating oil can be easily obtained by selectively using the upper radiator and the lower radiator according to the required cooling performance of the engine and the required cooling performance of the lubricating oil.

(Configuration 4) The vehicle cooling device according to any one of Configurations 1 to 3, in which the bracket includes a lower bracket portion, and the lower bracket portion includes a radiator support portion that supports the radiator provided at a vehicle front portion of the lower bracket portion, and an engine support portion that is supported by the engine provided at a vehicle rear portion of the lower bracket portion.

According to this configuration, since the radiator is supported by the bracket, the oil cooler can be supported without providing a dedicated support member that supports only the oil cooler.

(Configuration 5) The vehicle cooling device according to Configuration 4, in which the bracket includes an upper bracket portion on which the oil cooler is supported, the upper bracket portion is supported by the lower bracket portion and is supported by the engine, and the upper bracket portion includes a first wall portion that separates the oil cooler and an exhaust pipe, and a second wall portion that separates the oil cooler and a lower portion of the engine.

According to this configuration, it is possible to suppress an influence that the oil cooler receives radiant heat from the exhaust pipe and the engine.

(Configuration 6) The vehicle cooling device according to Configuration 4 or 5, in which the lower bracket portion is provided with a plate-shaped heat shielding member that separates the oil cooler and an exhaust pipe.

According to this configuration, it is possible to further suppress the influence that the oil cooler receives radiant heat from the exhaust pipe.

### Reference Signs List

- 10: Saddle-ride vehicle
- 12: Engine (power unit)
- 47a: Exhaust pipe
- 48d: Downstream-side exhaust pipe (exhaust pipe)
- 50: Radiator
- 60: Upper radiator
- 70: Lower radiator
- 90: Oil cooler
- 100: Bracket
- 110: Upper bracket (upper bracket portion)
- 111a: Vehicle width direction inner wall (first wall portion)
- 111b: Rear wall (second wall portion)
- 120: Lower bracket (lower bracket portion)
- 124: Radiator support portion
- 126: Engine fixing portion (engine support portion)
- 132: Heat shielding member

## Claims

1. A vehicle cooling device that includes an engine (12), a radiator (50) that is disposed on a vehicle front side of the engine (12) and cools cooling water for cooling the engine (12), and an oil cooler (90) that cools lubricating oil of the engine (12), and circulates the cooling water of the radiator (50) to the oil cooler (90), the vehicle cooling device **characterized by** comprising:
a bracket (100) that fixes the oil cooler (90) to a lower portion of the engine (12) and disposes the oil cooler (90) so as to overlap a rear side of the radiator (50) in a vehicle front view.

2. The vehicle cooling device according to claim 1, wherein
the radiator (50) includes an upper radiator (60) and a lower radiator (70) that is narrower in lateral width than the upper radiator (60), and
in the vehicle front view, the oil cooler (90) is disposed behind the radiator (50) so as to be entirely hidden, or is disposed so as to be partially viewed from behind the radiator (50).

3. The vehicle cooling device according to claim 2, wherein
the upper radiator (60) is used for circulating cooling water for cooling the engine (12), and the lower radiator (70) is used for circulating cooling water for cooling the oil cooler (90).

4. The vehicle cooling device according to any one of the preceding claims, wherein
the bracket (100) includes a lower bracket portion (120), and
the lower bracket portion (120) includes a radiator support portion (124) that supports the radiator (50) provided at a vehicle front portion of the lower bracket portion (120), and an engine support portion (126) that is supported by the engine (12) provided at a vehicle rear portion of the lower bracket portion (120).

5. The vehicle cooling device according to claim 4, wherein
the bracket (100) includes an upper bracket portion (110) on which the oil cooler (90) is supported,
the upper bracket portion (110) is supported by the lower bracket portion (120) and is supported by the engine (12), and
the upper bracket portion (110) includes a first wall portion (111a) that separates the oil cooler (90) and an exhaust pipe (47a), and a second wall portion (111b) that separates the oil cooler (90) and a lower portion of the engine (12).

6. The vehicle cooling device according to claim 4 or 5, wherein
the lower bracket portion (120) is provided with a plate-shaped heat shielding member (132) that separates the oil cooler (90) and an exhaust pipe (48d).
